# EUROPEAN PATENT SPECIFICATION

(11) **EP 1 884 631 B1**
(45) Date of publication and mention of the grant of the patent: **10.11.2010**
(21) Application number: 07015030.5
(22) Date of filing: 31.07.2007
(51) Int. Cl.: F01N 3/08, F01N 3/20, F01N 9/00, F01N 11/00, F01N 3/035, F01N 3/025

(54) **Exhaust gas purification system for internal combustion engine**
Abgasreinigungssystem für einen Verbrennungsmotor
Système de purification de gaz d'échappement pour moteur à combustion interne

(30) Priority: 01.08.2006 JP 2006210267
(43) Date of publication of application: 06.02.2008
(73) Proprietor: Toyota Jidosha Kabushiki Kaisha, Aichi-ken, 471-8571 (JP)
(72) Inventor: Tsujimoto, Kenichi, Toyota-shi Aichi-ken 471-8571 (JP); Oda, Tomihisa, Toyota-shi Aichi-ken 471-8571 (JP); Ueda, Takanori, Toyota-shi Aichi-ken 471-8571 (JP); Niimi, Kuniaki, Toyota-shi Aichi-ken 471-8571 (JP)
(74) Representative: Kuhnen & Wacker

(56) References cited:
- EP-A- 1 121 519
- EP-A- 1 512 847
- EP-A- 1 567 753
- EP-A- 1 837 496
- WO-A-2007/148821
- US-A1- 2002 178 716
- US-A1- 2006 140 819

## Description

### BACKGROUND OF THE INVENTION

### 1. Field of Invention

The present invention relates to an exhaust gas purification system for an internal combustion engine.

### 2. Description of Related Art

In the field of an internal combustion engine, there is known a technique in which, in order to purify particulate matter (hereinafter, also simply referred to as "PM") such as soot or SOF (Soluble Organic Fraction) and nitrogen oxide (NOx) contained in exhaust gas, a filter for collecting PM in exhaust gas, a storage-reduction type NOx catalyst for purifying NOx (hereinafter, also referred to as "NOx catalyst"), or a combination of NOx filter catalyst and filter is arranged in the exhaust system of the internal combustion engine.

In the above-mentioned technique, since an increase in the amount of NOx stored in an NOx catalyst causes a decrease in purification performance, a reductant is supplied to the NOx catalyst to perform the reduction of NOx stored in the NOx catalyst (hereinafter, referred to as "NOx reduction process").

Sulfur oxide (SOx) is also contained in exhaust gas. When the amount of SOx stored in an NOx catalyst increases, the NOx absorbing capacity of the NOx catalyst decreases, causing so-called SOx poisoning. Accordingly, when an NOx catalyst is poisoned, there are cases where reduction of SOx from the NOx catalyst is performed (hereinafter, referred to as "SOx poisoning recovery process") by raising the temperature of the NOx catalyst and lowering the air-fuel ratio of exhaust gas flowing into the NOx catalyst.

In the case of the above-mentioned filter, an increase in the amount of collected PM causes a rise in exhaust gas pressure and hence a decrease in engine performance due to clogging of the filter. Accordingly, the exhaust gas temperature on the upstream side of the filter is raised to remove the collected PM by oxidation, thereby achieving regeneration of the exhaust gas purification performance of the filter (hereinafter, referred to as "PM regeneration process").

Incidentally, in the NOx reduction process, SOx poisoning recovery process, and PM regeneration process (hereinafter, these will be also collectively referred to simply as "regeneration process") with respect to a storage-reduction type NOx catalyst and a filter (hereinafter, these will be also collectively referred to simply as "exhaust gas purifier"), it is difficult to selectively designate a specific location on the exhaust gas purifier in carrying out the above-mentioned regeneration process. Further, in a case where the exhaust gas purifier is equipped with a plurality of NOx catalysts or the like, it is difficult to carry out the above-mentioned regeneration process with respect to a specific selected NOx catalyst.

In particular, when carrying out an SOx poisoning recovery process for an NOx catalyst, there are cases where SOx stored in the downstream portion of the NOx catalyst in an exhanst passage is reduced first, and then SOx stored in the upstream portion is reduced. Alternatively, there are cases where, of a plurality of NOx catalysts provided, SOx stored in an NOx catalyst arranged on the downstream side is reduced first, and then SOx stored in an NOx catalyst arranged on the upstream side is reduced. In these cases, there is a possibility that the downstream portion of an NOx catalyst or an NOx catalyst arranged on the downstream side may be posioned again by SOx released from the upstream-side portion of the NOx catalyst or an NOx catalyst arranged on the upstream side.

Further, also with regard to the NOx reduction process with respect to the NOx catalyst or PM regeneration process with respect to the filter, there are cases where the efficiency of such regeneration process deteriorates due to the inability to carry out the regeneration process selectively with respect to the portion where the regeneration process is required.

Incidentally, there is proposed a technique according to which, in an exhaust gas purifier equipped with a plurality of catalysts provided serially in the exhaust passage of an internal combustion engine, the degree of deterioration of each catalyst or the degree of deterioration of the entire exhaust gas purifier is determined by taking the ease of deterioration of each catalyst into consideration (see, for exmaple, Patent Application Publication No. 2004-76681 (JP-A-2004-76681)).

In this regard, since the optimal conditions at the time of regeneration process varies in accordance with the degree of deterioration of a catalyst, it is preferable to execute a regeneration process in accordance with the degree of deterioration of each catalyst. However, no such technique is described in Japanese Patent Application Publication No. 2004-76681 (JP-A-2004-76681) mentioned above, and development of such a technique is desired.

US 2006/0140819 A1 discloses the regeneration of a deteriorated exhaust purifying apparatus.

### SUMMARY OF THE INVENTION

The present invention provides a process for regenerating an exhaust gas purifier such as an NOx catalyst or a filter, the regeneration process may be selectively carried out with respect to a predetermined portion where the regeneration process is required.

A first aspect of the present invention, provides an exhaust gas purification system for an internal combustion engine that regenerates the performance of an exhaust gas purifier provided downstream of an oxidation catalyst in an exhaust passage, the activity of the oxidation catalyst is adjusted to raise the temperature of a predetermined portion where the regeneration process is required, thereby bringing the predetermined portion into a state suitable for initiating the regeneration process.

More specifically, an exhaust gas purification system for an internal combustion engine is provided, according to claim 1, including: an exhaust passage whose one end is connected to the internal combustion engine and through which exhaust gas from the internal combustion engine passes; an oxidation catalyst provided in the exhaust passage and having an oxidation function; an exhaust gas purifier provided on a downstream side of the oxidation catalyst in the exhaust passage and purifying exhaust gas passing through the exhaust passage; reductant supplying means for supplying a reductant to exhaust gas flowing into the oxidation catalyst and the exhaust gas purifier; activity adjusting means for adjusting the activity of the oxidation catalyst; and regeneration means for carrying out a regeneration process of raising the temperature of a predetermined portion of the exhaust gas purifier and regenerating the predetermined portion, by supplying a reductant to the exhaust gas flowing into the oxidation catalyst by the reductant supplying means, and changing the amount of reductant oxidized in the oxidation catalyst by changing the activity of the oxidation catalyst by the activity adjusting means and wherein when the regeneration process is carried out in a downstream side of the exhaust gas purifier, the activity adjusting means reduces the activity of the oxidation catalyst.

In the above-described exhaust gas purification system for an inetrnal combustion engine, when the necessity of carrying out a regeneration process for the exhaust gas purifier arises, a reductant (for example, fuel) is supplied to the exhaust gas purifier by the reductant suppying means.

Here, in an NOx reduction process for an NOx catalyst as an example of the above-mentioned exhaust gas purifier, the air-fuel ratio of exhaust gas flowing into the NOx catalyst is made substantially stoichiometric or rich, and the ambient atmosphere of the NOx catalyst is rendered a reducing atmosphere, thereby reducing NOx stored in the NOx catalyst.

Further, in an SOx poisoning recovery process for an NOx catalyst, the bed temperature of the NOx catalyst is retained at a high temperature (for example, 600°C to 650°C), and the air-fuel ratio of the exhaust gas is made substantially stoichiometric or rich, thereby reducing NOx stored in the NOx catalyst.

However, in a typical NOx reduction process or SOx poisoning recovery process with respect to an NOx catalyst, NOx or SOx is reduced from a portion that has become a state suitable for initiating the reduction of NOx or SOx. In other words, it is difficult to reduce NOx or SOx selectively from a predetermined portion of the NOx catalyst.

In contrast, according to the exhaust gas purification system for an internal combustion engine described above, the activity of the oxidation catalyst for oxidizing the reductant introduced to the oxidation catalyst (hereinafter, also simply referred to as "oxidation-catalyst activity") is adjusted by the activity adjusting means, thereby making it possible to adjust the amount of reductant oxidized in the oxidation catalyst.

Further, in an NOx reduction process of an NOx catalyst as an example of the exhaust gas purifier mentioned above, or in an SOx poisoning recovery process, more reductant may be oxidized in the oxidation catalyst by increasing the activity of the oxidation catalyst, for example. As a result, the temperature of exhaust gas flowing into the NOx catalyst rises, so the temperature of the upstream portion of the NOx catalyst may be raised to a temperature that allows reduction of NOx or SOx (hereinafter, also simply referred to as "NOx-catalyst activation temperature").

Accordingly, by increasing the activity for reducing NOx or SOx in the upstream portion of the NOx catalyst (hereinafter, also simply referred to as "NOx-catalyst activity"), it is possible to promote the reduction reaction of NOx or SOx stored in the upstream portion.

The activity adjusting means may reduce the amount of reductant oxidized in an oxidation catalyst by lowering the activity of the oxidation catalyst. In that case, as the temperature of exhaust gas flowing into the NOx catalyst decreases, the NOx-catalyst activity in the upstream portion of the NOx catalyst decreases, thereby making it possible to reduce the amount of NOx or SOx reduced from the upstream portion of the NOx catalyst.

On the other hand, a reductant inducted to the NOx catalyst is oxidized as it passes through the upstream portion of the NOx catalyst, so that the temperature of exhaust gas passing through the NOx catalyst gradually rises. Then, heat generated in the upstream portion of the NOx catalyst is transmitted to a downstream portion, thus allowing the temperature in the downstream portion to rise to the NOx-catalyst activation temperature. By bringing the downstream portion of the NOx catalyst into a state more suitable for a regeneration process in this way, that is, increasing the temperature of the downstream portion of the NOx catalyst in this way, it is possible to promote the reduction reaction of NOx or SOx stored in the downstream portion of the NOx catalyst.

The exhaust gas purification system for an internal combustion engine is also applicable to a PM regeneration process with respect to a filter carrying an NOx catalyst as an example of the above-mentioned exhaust gas purifier (hereinafter, simply referred to as "filter"), in which PM collected by the filter is removed by oxidation. When carrying out the PM regeneration process for the filter, a reductant is inducted to the filter by the reductant supplying means, and the temperature of exhaust gas passing through the filter rises. As a result, the temperature of the filter is raised to a temperature enabling the oxidation of PM (hereinafter, also simply referred to as "PM-oxidation initiation temperature"), thereby removing PM by oxidation.

According to the present invention, as the oxidation-catalyst activity is adjusted by the activity adjusting means, the temperature of exhaust gas flowing into the filter is changed. That is, the temperature of exhaust gas flowing into the filter may be increased by increasing the oxidation-catalyst activity, or the temperature of exhaust gas flowing into the filter may be lowered by reducing the oxidation-catalyst activity.

For instance, when increasing the oxidation-catalyst activity by raising the temperature of the upstream portion of the filter to the PM-oxidation initiation temperature, PM collected in the upstream portion is preferentially oxidized.

On the other hand, when reducing the oxidation catalyst activity, by raising the temperature of the downstream portion of the filter to the PM-oxidation initiation temperature, PM collected in the portion located on the downstream portion is preferentially oxidized.

As described above, in the exhaust gas purification system for an internal combustion engine according to the present invention, the oxidation catalyst activity is adjusted by the activity adjusting means, thereby making it possible to change the activity with respect to the reduction reaction of NOx or SOx in an exhaust gas purifier such as an NOx catalyst or a filter, or the oxidation reaction of PM. Therefore, by bringing a predetermined portion where a regeneration process is required into a state suitable for initiating the regeneration process, the regeneration process can be carried out selectively with respect to the predetermined portion of the exhaust gas purifier. This makes it possible to improve the efficiency of regeneration process with respect to the exhaust gas purifier, thus enabling an improvement in fuel efficiency related to the regeneration process.

The exhaust gas purification system for an internal combustion engine according to the present invention may be configured such that a plurality of NOx catalysts are serially arranged within the exhaust passage, or may be configured such that one or a plurality of NOx catalysts and a filter are serially arranged.

The above-mentioned exhaust gas purification system according to the present invention may be configured so that when the regeneration process is carried out in the exhaust gas purifier with respect to the more downstream side, the activity adjusting means decreases the activity of the oxidation catalyst (oxidation-catalyst activity).

Accordingly, when carrying out the regeneration process with respect to the upstream portion of the exhaust gas purifier, the oxidation-catalyst activity is enhanced to raise the temperature of the upstream portion, thereby making it possible to perform the regeneration process efficiently with respect to the upstream portion.

Further, when carrying out the regeneration process with respect to the downstream portion of the exhaust gas purifier, the oxidation-catalyst activity is reduced to raise the temperature of the downstream portion, thereby making it possible to perform the regeneration process efficiently with respect to the downstream portion.

When carrying out a regeneration process for the exhaust gas purifier, the activity of the oxidation catalyst may be gradually reduced so that regeneration is performed sequentially from the upstream portion to the downstream portion of the exhaust gas purifier.

In a regeneration process according to the above-mentioned control, first, the upstream portion of the exhaust gas purifier is regenerated. Then, as the oxidation-catalyst activity is gradually reduced, the portion where the activity in the reduction reaction of NOx or SOx or the PM oxidation reaction is high gradually shifts to the downstream portion of the exhaust gas purifier.

That is, the regeneration process with respect to the exhaust gas purifier may be carried out from the upstream portion toward the downstream portion.

The control related to the regeneration process mentioned above proves more advantageous when applied to an SOx poisoning recovery process with respect to the NOx catalyst. This is because the downstream portion of the NOx catalyst is prevented from being brought into a state suitable for initiating the reduction of SOx earlier than the upstream portion, thereby preventing the NOx catalyst from being poisoned by SOx released from the upstream portion.

Further, by carrying out the regeneration process sequentially from the upstream side, heat generated on the upstream side is transmitted to the downstream side, thereby making it possible to reduce the amount of reductant required to raise the temperature of the downstream side when carrying out the regeneration process on the downstream side.

It should be noted that when a plurality of NOx catalysts are provided in the exhaust gas purifier, it is possible to prevent an NOx catalyst from being poisoned by SOx released from an upstream NOx catalyst that undergoes the regeneration process after a downstream NOx catalyst has been regenerated.

Further, the activity adjusting means may include heating means that heats the oxidation catalyst. The heat applied by the heating means is used to raise the temperature of the oxidation catalyst, in addition to the heat generated by the oxidation reaction of a reductant. Therefore, the oxidation-catalyst activity of the oxidation catalyst may be changed more reliably.

The heating means according to the present invention may be an electric heater that generates heat when energized, or may be a combustion burner or the like. Further, the heating means such as the electric heater or combustion burner may be provided upstream of the oxidation catalyst in the exhaust passage, or the heating means and the oxidation catalyst may be integrally combined together (for example, an electrically heated oxidation catalyst).

Further, according to the present invention, the heating means may change the amount of heat applied to the oxidation catalyst, and the activity adjusting means may be configured such that when the activity of the oxidation catalyst (oxidation-catalyst activity degree) is set, the amount of heat applied by the heating means is reduced.

Accordingly, the oxidation-catalyst activity may be increased by heating the oxidation catalyst by the heating means, so the portion where the NOx or SOx reduction reaction or PM oxidation reaction, with respect to the exhaust gas purifier, is promoted may be changed to a portion located on the further upstream in the exhaust passage.

On the other hand, the oxidation-catalyst activity may be lowered by reducing the amount of heat applied to the oxidation catalyst, so that the portion where the NOx or SOx reduction reaction or PM oxidation reaction is promoted may be changed to a portion located on the further downstream in the exhaust passage.

It is thus possible to adjust the oxidation-catalyst activity of the oxidation catalyst more efficiently, thereby enhancing the efficiency of the regeneration process with respect to the exhaust gas purifier.

According to the present invention, the adjusting of the amount of heat applied to the oxidation catalyst by the heating means may be performed gradually or in a stepwise manner. Further, the above-mentioned expression "adjusting of the amount of heat applied to the oxidation catalyst" also refers to a case where, for example, if the heating means is the electric heater, the amount of heat is changed by switching between a state in which the electric heater is energized (hereinafter, also simply referred to as "energized state") and a state in which the electric heater is de-energized (hereinafter, also simply referred to as "de-energized state"). Further, the above expression also refers to a case where the amount of heat is changed by changing the amount of energization under the above-mentioned energized state of the electric heater.

It should be noted that the reductant supplying means according to the present invention may be configured to include a reductant adding valve for injecting a reductant into exhaust gas, or a fuel injection valve for performing sub-injection of fuel during the expansion stroke, exhaust stroke, or the like of the engine.

In the exhaust gas purification system for an internal combustion engine according to the present invention, because an oxidation catalyst is provided upstream of the exhaust gas purifier, a reductant supplied by the reductant supplying means is oxidized in the oxidation catalyst first. The reductant supplying means may be a fuel adding valve, in which case the reductant is fuel. In this case, when the amount of reductant supplied at a time by the reductant supplying means is changed, the amount of reductant that is oxidized in the oxidation catalyst can be changed.

It is possible to change the activity by changing the addition pattern of reductant (fuel) added from the reductant supplying means (the fuel adding valve). In this case, the addition pattern may be changed by changing the periodic addition time of reductant (fuel) from the reductant supplying means (the fuel adding valve).

The activity adjusting means according to the present invention may be configured such that when the lower degree of activity of the oxidation catalyst is set, the amount of reductant supplied at a time by the reductant supplying means may be large.

For example, when a large amount of reductant is inducted to an oxidation catalyst, the amount of oxygen available to react with the inducted amount of reductant may be insufficient in some cases, so that the amount of reductant that flows out from the oxidation catalyst, without being oxidized by the oxidation catalyst, increases. Therefore, when the amount of reductant supplied at one time is increased, the lower degree of activity of the oxidation catalyst can be set, that is, the activity of the oxidation catalyst may be reduced by increasing the amount of reductant supplied at one time. In this case, because more reductant is supplied to the downstream portion of the oxidation catalyst, the temperature within the exhaust gas purifier further downstream can be raised.

On the other hand, when a small amount of reductant is inducted to an oxidation catalyst at one time, there is no possibility that the amount of oxygen required to oxidize the reductant will become insufficient, so more reductant may be oxidized in the oxidation catalyst. Therefore, the activity of the oxidation catalyst may be enhanced as the amount of reductant supplied at one time is reduced.

As described above, it is possible to adjust the activity of the oxidation catalyst (oxidation-catalyst activity) by adjusting the amount of reductant supplied at one time by the reductant supplying means. Therefore, for example, the oxidation-catalyst activity may be adjusted reliably even if an exhaust gas purification system for an internal combustion engine that is not provided with the heating means.

In the present invention, when adjusting the activity of the oxidation catalyst, in addition to changing the amount of reductant supplied at one time by the reductant supplying means, the amount of heat applied by the heating means may also be adjusted. This makes it possible to adjust the oxidation-catalyst activity with greater precision.

It should be noted that, for example, in a case where the reductant supplying means according to the present invention is a reductant adding valve for injecting a reductant to exhaust gas, or a fuel injection valve or the like for performing sub-injection of fuel during the expansion stoke, exhaust stroke, or the like of an internal combustion engine, when a reductant is to be supplied from the reductant adding valve or the like over a plurality of times, the larger amount of reductant added or injected at a time may be set when the lower degree of activity of the oxidation catalyst is set. In other words, the duration of one valve opening of the above-mentioned reductant adding valve or the like may be increased.

According to the present invention, in a regeneration process for an exhaust gas purifier, such as an NOx catalyst or a filter, the activity of an oxidation catalyst provided upstream of the exhaust gas purifier is changed to raise the temperature of a predetermined portion where the regeneration process is required, thereby bringing the predetermined portion into a state suitable for initiating the regeneration process. Accordingly, the regeneration process may be carried out selectively at a predetermined portion of the exhaust gas purifier.

### BRIEF DESCRIPTION OF THE DRAWINGS

The features, advantages thereof, and technical and industrial significance of this invention will be better understood by reading the following detailed description of preferred embodiments of the invention, when considered in connection with the accompanying drawings, in which:
FIG. 1 is a diagram showing the general configuration of an internal combustion engine according to an embodiment of the present invention and its intake/exhaust system;
FIG. 2 is a conceptual diagram illustrating an SOx poisoning recovery process with respect to an NOx catalyst and a filter according to a first embodiment;
FIG 3 is a flow chart showing an SOx poisoning recovery routine according to the first embodiment;
FIGs. 4A and 4B are time charts showing the air-fuel ratio of exhaust gas and the storage amount of SOx in an exhaust gas purification section according to the first embodiment, in which FIG. 4A is a time chart illustrating the air-fuel ratio and FIG. 4B is a time chart illustrating the storage amount of SOx stored in each of an upstream portion of an NOx catalyst, a downstream portion of the NOx catalyst, and a filter;
FIG. 5 is a flow chart showing an SOx-poisoning-recovery-process-completion determining routine according to the first embodiment;
FIGs. 6A and 6B are time charts showing a command signal issued to a fuel adding valve from an ECU, in which FIG. 6A is a chart showing the short duration of one valve opening of the fuel adding valve and FIG. 6B is a chart showing the long duration of one valve opening of the fuel adding valve; and
FIG. 7 is a flow chart showing a second SOx poisoning recovery routine according to a second embodiment.

### DETAILED DESCRIPTION OF THE EMBODIMENTS

In the following description and the accompanying drawings, the present invention will be described in more detail with reference to example embodiments. It is to be understood that unless specifically stated otherwise, the dimensions, materials, shapes, and relative arrangement of components described in this embodiment are not intended to limit the technical scope of the present invention thereto.

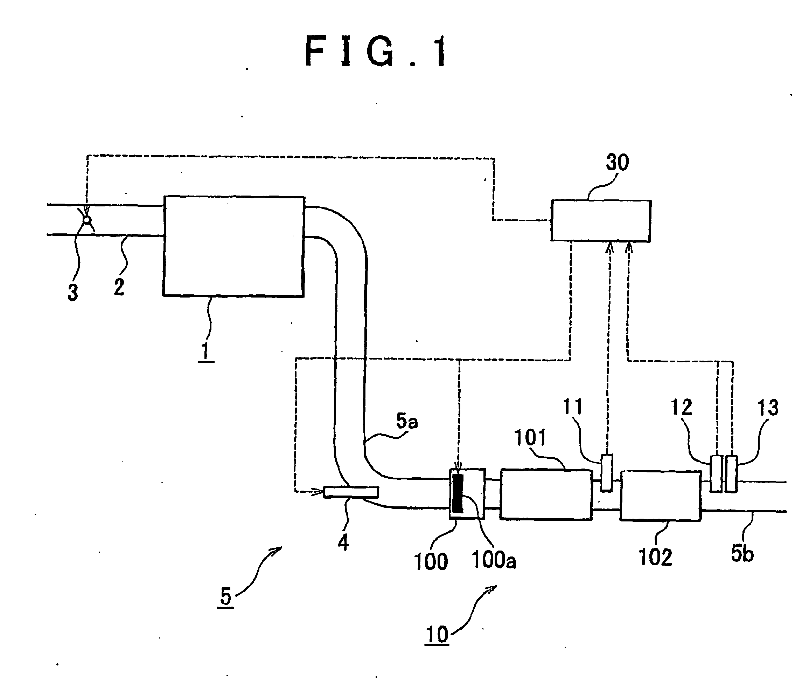

First, a first embodiment of the present invention will be described. Here, description will be given of a case where the present invention is applied to a vehicle-driving diesel engine. FIG. 1 is a diagram showing the general configuration of an internal combustion engine 1 according to the present invention and its intake/exhaust system. In FIG. 1, an intake pipe 2 through which intake gas flowing into the internal combustion engine 1 flows is connected to the internal combustion engine 1. In the intake pipe 2, there is provided with a throttle valve 3 that adjusts the flow rate of intake gas that flows within the intake pipe 2. Further, an exhaust pipe 5, through which exhaust gas from the internal combustion engine 1 flows, is connected to the internal combustion engine 1. The exhaust pipe 5 is connected to a muffler (not shown) at the downstream end of the exhaust pipe 5. An exhaust gas purification section 10 that removes particulate matter (for example, soot) or NOx from exhaust gas is arranged in the middle portion of the exhaust pipe 5. Hereinafter, the portion of the exhaust pipe 5 located upstream of the exhaust gas purification section 10 will be referred to as a first exhaust pipe 5a, and the portion located downstream of the exhaust gas purification section 10 will be referred to a second exhaust pipe 5b. The first exhaust pipe 5a and the second exhaust pipe 5b constitute an exhaust passage according to the first embodiment.

In the exhaust gas purification section 10 according to the first embodiment, an electrically heated catalyst EHC 100, which is an oxidation catalyst provided with an electric heater 100a that generates heat when energized, an NOx catalyst 101 carrying a storage-reduction type NOx catalyst, and a filter 102 having a storage-reduction type NOx catalyst carried on a filter for collecting particulate matter in exhaust gas, are provided in series in the stated order from the upstream side. It should be noted that the EHC 100 is an embodiment of an oxidation catalyst in the first embodiment. Further, the NOx catalyst 101 and the filter 102 are each embodiments of an exhaust gas purifier in the first embodiment. The electric heater 100a is an embodiment of an activity adjusting means or heating means in the first embodiment.

In FIG. 1, the first exhaust pipe 5a includes a fuel adding valve 4 for adding fuel during the NOx reduction process with respect to the NOx catalyst 101 or the filter 102. The fuel adding valve 4 is an embodiment of the reductant supplying means in the first embodiment.

A first temperature sensor 11 and a second temperature sensor 12 for detecting the temperature of exhaust gas are provided between the NOx catalyst 101 and the filter 102 and downstream of the filter 102, respectively, in the exhaust gas purification section 10. Further, an air-fuel ratio sensor 13 for detecting the air-fuel ratio of exhaust gas is provided downstream of the filter 102 in the exhaust gas purification section 10.

The internal combustion engine 1 and its intake/exhaust system configured as described above are also provided with an electronic control unit (ECU) 30 for controlling the internal combustion engine 1 and the intake/exhaust system. The ECU 30 controls the operational state or the like of the internal combustion engine 1 in accordance with the operating condition of the internal combustion engine 1 or demands of a driver, and also performs control related to the EHC 100, the NOx catalyst 101, and the like of the internal combustion engine 1.

In addition to various sensors related to the control of the operational state of the internal combustion engine 1, such as a crank position sensor (not shown) for detecting the engine speed of the internal combustion engine 1 and an accelerator position sensor (not shown) for detecting the accelerator position, the first temperature sensor I 1 and the second temperature sensor 12, and the air-fuel ratio sensor 13 are connected to the ECU 30 via electric wiring. The output signals of these sensors are input to the ECU 30. On the other hand, an in-cylinder fuel injection valve (not shown) inside the internal combustion engine 1, the fuel adding valve 4, and the electric heater 100a are connected to the ECU 30 via electric wiring for control by the ECU 30. It should be noted that in the first embodiment, energization and de-energization of the electric heater 100a can be switched by a command from the ECU 30, and also the amount of energization of the electric heater 100a upon energization can be changed.

Further, the ECU 30 includes a CPU, a ROM, a RAM, and the like. The ROM stores programs for performing various controls for the internal combustion engine 1, and maps storing data. For example, an SOx poisoning recovery process for reducing SOx stored in the exhaust gas purifier 10 is also an example of programs stored in the ROM of the ECU 30.

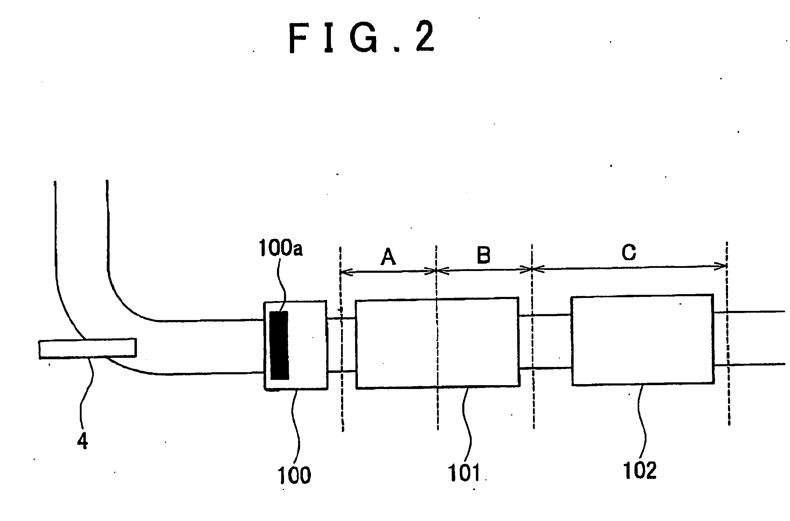

Next, with regard to the exhaust gas purification system according to the first embodiment, the control of reducing SOx stored in the NOx catalyst 101 1 and the filter 102 will be described. FIG. 2 is a conceptual diagram illustrating an SOx poisoning recovery process with respect to the NOx catalyst 101 and the filter 102 according to the first embodiment.

In this regard, in order to reduce SOx stored in the NOx catalyst 101 or the filter 102, it is necessary to keep the bed temperature of the NOx catalyst 101 or the filter 102 at a high temperature (for example, from 600°C to 650°C), and make the air-fuel ratio of the exhaust gas inducted to the NOx catalyst 101 or the filter 102 substantially stoichiometric or rich.

In FIG. 2, the portion indicated by symbol A is an upstream portion of the NOx catalyst 101, and the portion indicated by symbol B is a downstream portion of the NOx catalyst 101. Further, the portion indicated by symbol C is the filter 102. Here, in a case where, for example, SOx stored in the downstream portion (B) of the NOx catalyst 101 is reduced before that in the upstream-side portion (A) of the NOx catalyst 101, there is a possibility that the downstream-side portion may be poisoned again by SOx reduced and released from the upstream-side portion. Likewise, if SOx stored in the upstream portion (A) of the NOx catalyst 101 and SOx stored in the downstream portion (B) of the NOx catalyst 101 are reduced after the regeneration process has been performed in the filter 102 (C), there is a possibility that the filter 102 (C) may be poisoned again.

Accordingly, in the first embodiment, the degree of activity of the EHC 100 for oxidizing fuel is adjusted so that an SOx poisoning recovery process is carried out in the order of the upstream portion (A) of the NOx catalyst 101, the downstream portion (B) of the NOx catalyst 101, and the filter 102 (C). That is, the activity of the EHC 100 is adjusted by changing the electric power applied to the electric heater 100a provided in the EHC 100, thereby changing the portion where the reduction reaction of SOx is promoted. Hereinbelow, detailed description will be given of the control related to the SOx poisoning recovery process in the first embodiment.

First, when reducing SOx in the upstream portion (A) of the NOx catalyst 101, the electric power applied to the electric heater 100a is set to the maximum (hereinafter, the electric power at this time is also simply referred to as "maximum power"). That is, by raising the temperature of the EHC 100 to the maximum, the activity of the EHC 100 is increased. This allows more fuel to be oxidized in the EHC 100, thereby making it possible to introduce higher temperature exhaust gas to the NOx catalyst 101.

As a result, first, the ambient atmosphere in the upstream portion (A) of the NOx catalyst 101 is brought into a state suitable for initiating the reduction of SOx (for example, a state where the temperature is 600°C to 650°C and the air-fuel ratio is substantially stoichiometric or rich). Further, a large portion of the fuel added to the exhaust gas is oxidized by the EHC 100 and the upstream portion (A) of the NOx catalyst 101, thus making it possible to reduce the amount of fuel that reaches the downstream portion (B) of the NOx catalyst 101 and the filter 102 (C). Sox stored in the upstream portion (A) of the NOx catalyst 101 can be thus reduced preferentially.

Next, when reducing SOx stored in the downstream portion (B) of the NOx catalyst 101, the electric power applied to the electric heater 100a is set smaller than the maximum power (hereinafter, the electric power at this time is also simply referred to as "intermediate power"). Accordingly, the fuel-oxidation activity of the EHC 100 is reduced in comparison with that when reducing SOx in the upstream portion (A) of the NOx catalyst 101, so that the temperature of the exhaust gas inducted to the NOx catalyst 101 decreases.

Because a greater amount of fuel is thus contained in the exhaust gas inducted to the NOx catalyst 101 in comparison with that when reducing SOx in the upstream portion (A) of the NOx catalyst 101, the amount of fuel that undergoes reaction in the upstream portion (A) of the NOx catalyst 101 increases. Heat is thus generated in the upstream portion (A) of the NOx catalyst 101. The heat flows downstream together with the exhaust gas, raising the temperature of the downstream portion (B) of the NOx catalyst 101. Because the ambient atmosphere in the downstream portion (B) of the NOx catalyst 101 is thus brought into a state suitable for initiating the reduction of SOx, SOx stored in the downstream portion (B) is reduced preferentially.

Next, when reducing SOx stored in the filter 102 (C), the energization of the electric heater 100a is stopped. Accordingly, the fuel-oxidation activity of the EHC 100 further decreases in comparison with that when reducing SOx in the upstream portion (A) of the NOx catalyst 101, so that the temperature of the exhaust gas inducted to the NOx catalyst 101 decreases.

Although a greater amount of fuel is thus contained in the exhaust gas inducted to the NOx catalyst 101 in comparison with that when reducing SOx in the upstream portion (A) of the NOx catalyst 101, the amount of fuel that undergoes reaction in the upstream portion (A) of the NOx catalyst 101 is small because the temperature of the exhaust gas is low. Because more fuel thus undergoes reaction in the downstream portion (B) of the NOx catalyst 101, more heat is generated in the downstream portion (B). The heat flows to the downstream together with the exhaust gas, raising the temperature of the filter 102 (C). This brings the ambient atmosphere in the filter 102 (C) into a state suitable for initiating the reduction of SOx, so that SOx stored in the filter 102 (C) is reduced preferentially.

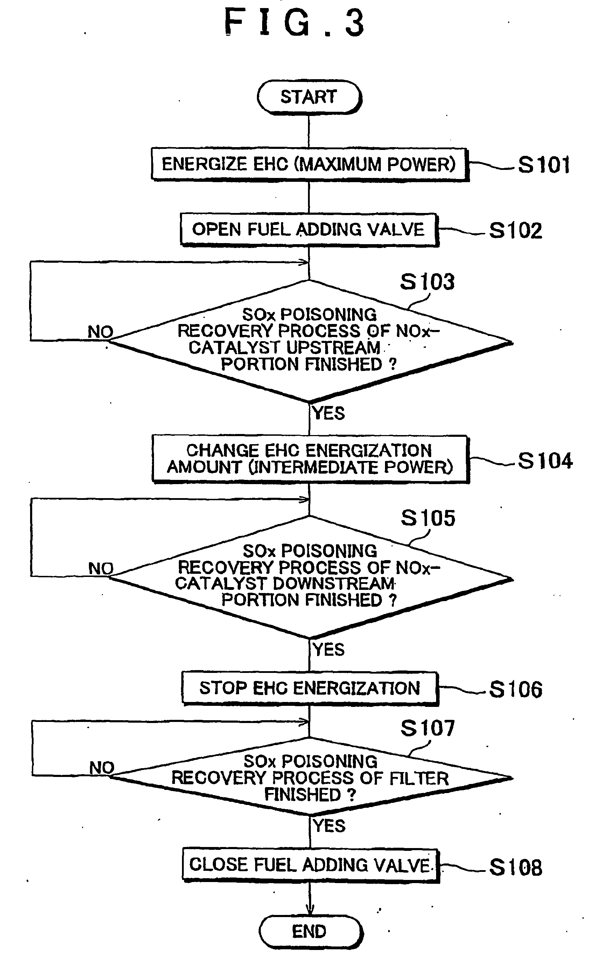

FIG. 3 is a flow chart showing the SOx poisoning recovery routine according to the first embodiment. This routine is a program stored in the ROM within the ECU 30 and executed at predetermined intervals during operation of the internal combustion engine 1. It should be noted that the ECU 30 executing this routine is an embodiment of to the egeneration means in the first embodiment.

When this routine is executed, first, in step S101, the maximum power is applied to the electric heater 100a, and the temperature of the EHC 100 is raisedto a temperature for recovering the upstream portion (A) of the NOx catalyst 101 from SOx poisoning. Then, when step S101 is finished, the process proceeds to step S102.

In step S 102, the fuel adding valve 4 is opened, and a predetermined amount of fuel that is experimentally determined in advance is added to the first exhaust pipe 5a. As described above, the added fuel is oxidized in the EHC 100, and exhaust gas of higher temperature is inducted to the NOx catalyst 101. Then, the ambient atmosphere in the upstream portion (A) of the NOx catalyst 101 is brought into a state suitable for initiating the reduction of SOx, so that SOx in the upstream portion (A) of the NOx catalyst 101 is reduced preferentially. Then, when step S 102 is finished, the process proceeds to step S103.

In step S 103, it is determined whether the SOx poisoning recovery process of the upstream (A) of the NOx catalyst 101 has been finished. That is, in this step, it is determined whether the current state is suitable for initiating the SOx poisoning recovery process of the downstream portion (B) of the NOx catalyst 101. Specifically, the temperature TH1 of the upstream portion (A) of the NOx catalyst 101 is derived from the temperature detected by the first temperature sensor 11, and the period of time T1 for which temperature TH remains at a temperature equal to or higher than a predetermined temperature (for example, 600°C to 650°C) is measured. Then, it is determined whether the SOx poisoning recovery process of the upstream-side portion (A) of the NOx catalyst 101 has finished on the basis of whether time T1 is equal to or larger than a threshold that is experimentally determined in advance.

That is, if it is determined that the period of time T1 that the temperature TH1 remains above a predetermined temperature is less than the above-mentioned threshold, it is determined that the SOx poisoning recovery process of the upstream-side portion (A) of the NOx catalyst 101 is not finished, and the SOx poisoning recovery process in the upstream portion (A) of the NOx catalyst 101 is continued.

On the other hand, if it is determined that time T1 is equal to or exceeds the above-mentioned threshold, it is determined that the SOx poisoning recovery process of the upstream portion (A) of the NOx catalyst 101 has finished, and the process proceeds to step S104.

In step S 104, the electric power applied to the electric heater 100a is changed from the maximum power to the intermediate power. That is, the temperature of the EHC 100 is changed to a temperature for recovering SOx poisoning of the downstream portion (B) of the NOx catalyst 101. This causes the activity of the EHC 100 to decrease, so more fuel reaches the upstream portion (A) of the NOx catalyst 101, and heat is generated in the upstream portion (A). The heat flows downstream together with the exhaust gas, thereby raising the temperature in the downstream portion (B) of the NOx catalyst 101. As a result, SOx stored in the downstream portion (B) of the NOx catalyst 101 is reduced preferentially. Then, when step S104 is finished, the process proceeds to step S 105.

In step S 105, it is determined whether the SOx poisoning recovery process of the downstream portion (B) of the NOx catalyst 101 has finished. That is, in this step, it is determined whether the current state is suitable for performing the SOx poisoning recovery process of the filter 102 (C). Specifically, the temperature TH2 of the downstream-side portion (B) of the NOx catalyst 101 is derived from the detection value of the first temperature sensor 11, and after the electric power applied to the electric heater 100a is changed to the intermediate power, the period of time T2 for which the temperature TH2 remains at or above the predetermined temperature (for example, 600°C to 650°C) is measured. Then, it is determined whether the SOx poisoning recovery process of the downstream-side portion (B) of the NOx catalyst 101 has finished on the basis of whether time T2 is equal to or larger than a threshold that is experimentally determined in advance.

That is, if it is determined that time T2 is below the above-mentioned threshold, it is determined that the SOx poisoning recovery process of the downstream portion (B) of the NOx catalyst 101 has not finished, and the SOx poisoning recovery process in the downstream portion (B) of the NOx catalyst 101 is continued.

On the other hand, if it is determined that time T2 is equal to or exceeds the above-mentioned threshold, it is determined that the SOx poisoning recovery process of the downstream portion (B) of the NOx catalyst 101 has finished, and the process proceeds to step S106.

In step S106, the energization of the electric heater 100a is stopped. That is, the temperature of the EHC 100 is changed to a temperature for recovering SOx poisoning of the filter 102 (C). Then, as described above, the activity of the EHC 100 further decreases, so that the amount of fuel inducted to the NOx catalyst 101 further increases. However, because the temperature of exhaust gas further decreases, the oxidation reaction of fuel takes place further downstream in the NOx catalyst 101. As a result, the amount of fuel that is oxidized in the upstream portion (A) of the NOx catalyst 101 decreases, and the amount of fuel that is oxidized in the downstream portion (B) of the NOx catalyst 101 increases. Because the amount of heat generated in the downstream portion (B) of the NOx catalyst 101 thus increases, the temperature of the filter 102 (C) located downstream of the downstream portion (B) rises, so that SOx stored in the filter 102 (C) is reduced preferentially. Then, when step S106 is finished, the process proceeds to step S107.

In step S107, it is determined whether the SOx poisoning recovery process of the filter 102 (C) has finished. That is, in this step, it is determined whether this routine may be ended. Specifically, the temperature TH3 of the filter 102 (C) is derived from the detection value of the second temperature sensor 12, and after the energization of the electric heater 100a stops, the period of time T3 for which the filter temperature TH3 remains at or above the predetermined temperature (for example, 600°C to 650°C) is measured. Then, it is determined whether the SOx poisoning recovery process of the filter 102 (C) has finished on the basis of whether time T3 is equal to or exceeds a threshold that is experimentally determined in advance.

That is, if it is determined that the filter-reducing-atmosphere retention time T3 is less than the above-mentioned threshold, it is determined that the SOx poisoning recovery process of the filter 102 (C) has not been finished, and the SOx poisoning recovery process in the filter 102 (C) is continued.

On the other hand, if it is determined that the filter-reducing-atmosphere retention time T3 is equal to or larger than the above-mentioned threshold, it is determined that the SOx poisoning recovery process of the filter 102 (C) has been finished, and the process proceeds to step S108.

In step S 108, the fuel adding valve 4 is closed to stop addition of fuel. Then, when step S108 is finished, this routine is ended.

As described above, according to this routine, when reducing SOx stored in each of the upstream portion (A) of the NOx catalyst 101, the downstream portion (B) of the NOx catalyst 101, and the filter 102 (C), the activity of the EHC 100 is adjusted by adjusting the electric power applied to the electric heater 100a, so that the temperature of a predetermined portion in the NOx catalyst 101 or the filter 102 is raised to thereby initiate the reduction reaction of SOx in the predetermined portion. Then, by gradually lowering the activity of the EHC 100, the SOx poisoning recovery process can be carried out sequentially from the upstream to the downstream of the exhaust gas purification section 10. As a result, the SOx poisoning recovery process may be carried out in an efficient manner, thereby making it possible to improve fuel efficiency in carrying out the SOx poisoning recovery process.

Further, it is possible to prevent SOx stored in the upstream portion (A) of the NOx catalyst 101 from being reduced later than that in the downstream portion (B) of the NOx catalyst 101 or the filter 102 (C), thereby preventing the downstream portion (B) of the NOx catalyst 101, the filter 102 (C), or the like from being poisoned by SOx again.

While the filter temperature TH3 is obtained from the second temperature sensor 12 in step S107 in this routine, the filter temperature TH3 may be obtained from the first temperature sensor 11.

The determination on the completion of the SOx poisoning recovery process in each of steps S 103, S 105, and S 107 in this routine is made based on the period of time for which the temperature (TH1 to TH3) of the NOx catalyst 101 or the filter 102 remains at a predetermined temperature or above. However, the determination may be made based on the period of time T4 for which the air-fuel ratio detected by the air-fuel ratio sensor 13 remains rich. Alternatively, the may be made based on the period of time that the above-mentioned temperature remains at or above a predetermined temperature in conjunction with the period of time that the air-fuel ratio remains rich.

The exhaust gas purification system for an internal combustion engine according to the first embodiment may be provided with an oxygen concentration sensor instead of the air-fuel ratio sensor 13. In such a case, the above-mentioned determination on the completion of the SOx poisoning recovery process may be based on the period of time for which the oxygen concentration detected by the oxygen concentration sensor remains at a predetermined concentration or less, instead of the period of time for which the air-fuel ratio remains rich.

With regard to the determination on the completion of the SOx poisoning recovery process in each of steps S 103, S 105, and S 107, the relationship among the electric power applied to the electric heater 100a, the amount of fuel added from the fuel adding valve 4, and the amount of SOx reduced from each of the upstream portion (A) of the NOx catalyst 101, the downstream portion (B) of the NOx catalyst 101, and the filter 102 (C) may be experimentally obtained in advance, and the completion timing of the SOx poisoning recovery process with respect to each of the above-mentioned portions may be set in advance on the basis of this relationship.

While in the first embodiment the description is directed to the case where the SOx poisoning recovery process is performed sequentially from the upstream portion (A) of the NOx catalyst 101, the downstream portion (B) of the NOx catalyst 101, and the filter 102 (C), this should not be construed restrictively. For example, the activity of the EHC 100 for oxidizing fuel may be changed more finely by adjusting the electric power applied to the electric heater 100a more finely. The portion where the reduction reaction of SOx is to be initiated may be thus changed more finely in the SOx poisoning recovery process with respect to the NOx catalyst 101 or the filter 102.

While in the first embodiment the description is directed to the case where an SOx poisoning recovery process is carried out with respect to the NOx catalyst 101 and the filter 102, the control according to the first embodiment is also applicable to the carrying out of an NOx reduction process.

In the case where the control according to the first embodiment is applied to the carrying out of an NOx reduction process, for example, the portion where the reduction reaction of NOx is to be initiated may be sequentially changed in a predetermined portion of the NOx catalyst 101 or the filter 102. This makes it possible to reduce NOx efficiently from a portion where it is required to carry out the NOx reduction process, thereby improving fuel efficiency in carrying out the NOx reduction process.

Further, the control according to the first embodiment is also applicable to the carrying out of a PM recovery process with respect to the filter 102. That is, the portion where the oxidation reaction of PM is to be initiated may be sequentially changed in a predetermined portion of the filter 102 by adjusting the activity of the EHC 100. For example, a control may be performed so as to make the activity of the EHC 100 extremely high to thereby cause intensive oxidation and removal of PM collected on the front end face of the filter 102.

Next, as a modification of the exhaust gas purification system according to the first embodiment, a control for reducing SOx stored in the NOx catalyst 101 and the filter 102 that differs from the above-described control according to the SOx poisoning recovery routine will be described. In this control as well, the stored SOx is reduced in the order of the upstream portion (A) of the NOx catalyst 101, the downstream portion (B) of the NOx catalyst 101, and the filter 102 (C). Further, in this control, the determination as to whether the SOx poisoning recovery process has finished with respect to each of the upstream portion (A) of the NOx catalyst 101, the downstream portion (B), and the filter 102 (C) is made based on the air-fuel ratio detected by the air-fuel ratio sensor 13.

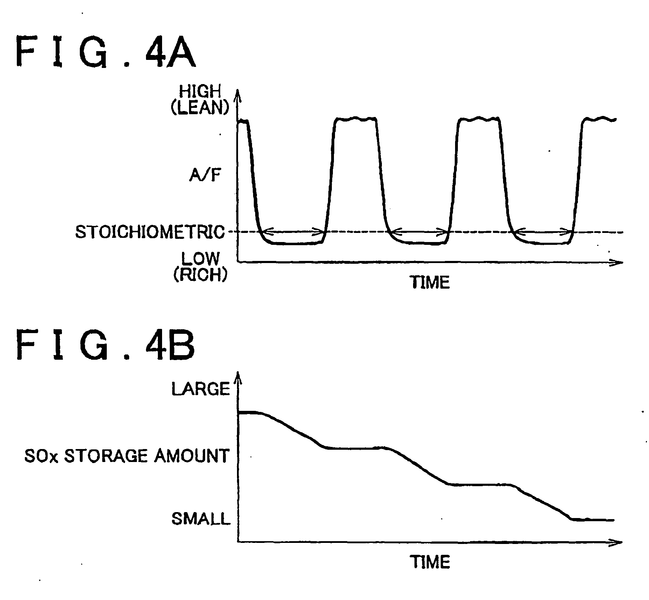

FIGs. 4A and 4B are time charts showing the air-fuel ratio of exhaust gas and the storage amount of SOx in an exhaust gas purification section according to this modification. FIG. 4A is a time chart illustrating the air-fuel ratio of exhaust gas A/F in the exhaust gas purification section. FIG. 4B is a time chart illustrating the storage amount of SOx stored in each of the upstream portion (A) of the NOx catalyst 101, the downstream portion (B) of the NOx catalyst 101, and the filter 102 (C). Although no illustration is given of how the temperature T1 of the upstream portion of the NOx catalyst, the temperature T2 of the downstream portion of the NOx catalyst, and the filter temperature T3 described above change with time, the following description assumes that each of the temperatures is retained at the above-described predetermined temperature (for example, 600°C to 650°C).

During the SOx poisoning recovery process with respect to each of the upstream portion (A) of the NOx catalyst 101, the downstream portion (B) of the NOx catalyst 101, and the filter 102 (C), when fuel is added from the fuel adding valve 4, the air-fuel ratio A/F decreases as shown in the drawing. Then, when this air-fuel ratio A/F is retained at a rich air-fuel ratio, the ambient atmosphere in each of the above-mentioned portions is brought into a state suitable for initiating the reduction of SOx, so that SOx stored in each of the portions may be reduced.

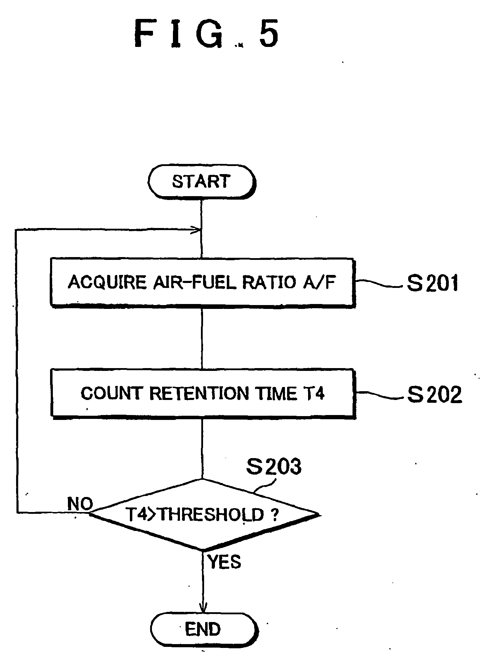

FIG. 5 is a flow chart showing an SOx-poisoning-recovery -completion determining routine according to this modification. This routine is a subroutine executed in each of the processes of the steps S103, S105, and S107 in the SOx poisoning recovery routine shown in FIG. 3. Further, this routine is also a program stored in the ROM within the ECU 30. In the following, an example of control as a subroutine executed in step S 103 in the SOx poisoning recovery routine will be described. It should be noted that in this modification, the ECU 30 executing this routine is an embodiment of a regeneration means.

When the routine is executed, first, in step S201, the air-fuel ratio A/F of exhaust gas in the exhaust gas purification section 10 is obtained from the air-fuel ratio sensor 13. Then, when step S201 is finished, the process proceeds to step S202.

In step S202, the above-mentioned rich-air-fuel ratio retention time T4 is counted on the basis of the air-fuel ratio A/F thus acquired. Then, when step S202 is finished, the process proceeds to step S203.

In step S203, it is determined whether time T4 is equal to or exceeds a threshold that is experimentally determined in advance. That is, in this step, it is determined whether sufficient reduction of SOx stored in the upstream portion of the NOx catalyst 101 has been performed. This threshold represents a value of time T4 that allows the amount of SOx stored in the upstream portion (A) of the NOx catalyst 101 to be sufficiently reduced. Specifically, this may be experimentally determined in advance on the basis of the relationship between time T4 and the SOx storage amount as shown in FIGs. 4A and 4B.

If it is determined that time T4 is less than the above-mentioned threshold, it is determined that SOx stored in the upstream portion (A) of the NOx catalyst 101 has not been sufficiently reduced, and the process returns to step S201. That is, the SOx poisoning recovery process with respect to the upstream portion (A) of the NOx catalyst 101 continues until the air-fuel ratio A/F is acquired and the rich-air-fuel ratio retention time T4 is equal to or larger than the above-mentioned threshold.

On the other hand, if it is determined that time T4 is equal to or exceeds the above-mentioned threshold, it is determined that SOx stored in the upstream portion (A) of the NOx catalyst 101 has been sufficiently reduced, and this routine is ended.

As described above, according to this subroutine, the determination as to whether the SOx poisoning recovery process has been finished with respect to each of the upstream portion (A) of the NOx catalyst 101, the downstream portion (B) of the NOx catalyst 101, and the filter 102 (C) may be made with good precision on the basis of the period of time for which the air-fuel ratio A/F of exhaust gas in the exhaust gas purification section 10 remains rich.

While the routine has been described as a subroutine executed in step S 103 in the SOx poisoning recovery routine, when this routine is executed in step S 105 or S107, "the upstream portion (A) of the NOx catalyst 101" may be replaced with "the downstream portion (B) of the NOx catalyst 101" or "the filter 102(C)".

Next, an exhaust gas purification system for an internal combustion engine according to a second embodiment of the present invention will be described. Here, the configuration of the internal combustion engine 1 is the same as that in the first embodiment, and detailed description thereof is not repeated. The control of reducing SOx stored in the NOx catalyst 101 and the filter 102 when the electric power applied to the electric heater 100a cannot be adjusted will be described. Further, as in the first embodiment, the case where the SOx poisoning recovery process is sequetially carried out sequentially from the upstream portion (A) of the NOx catalyst 101, the downstream portion (B) of the NOx catalyst 101, and the filter 102 (C) will be described.

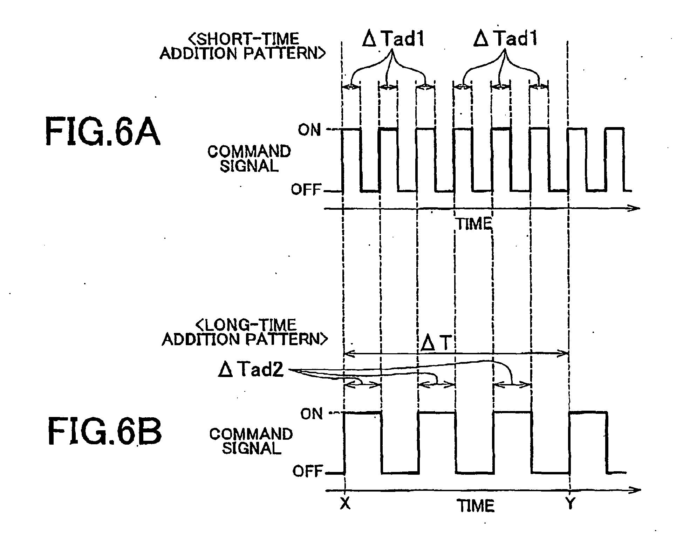

With reference to FIGs. 6A and 6B, the manner in which fuel is added from the fuel adding valve 4 is controlled according to the second embodiment will be described. FIGs. 6A and 6B are time charts that show a command signal issued to the fuel adding valve 4 from the ECU 30. FIG. 6A is a chart showing a state in which the duration of one valve opening of the fuel adding valve is short. FIG. 6B is a chart showing a state in which the duration of one valve opening of the fuel adding valve is long. When the command signal shown in the drawing is "ON", the fuel adding valve 4 opens to add fuel, and when the command signal is "OFF", the fuel adding valve 4 closes to stop the addition of fuel.

As shown in FIGs. 6A and 6B, the addition of fuel from the fuel adding valve 4 is performed intermittently. Here, the period of time for which the fuel adding valve 4 is opened during one addition of fuel is referred to as the addition time. As shown in FIGs. 6A and 6B, the addition time of the fuel by the fuel adding valve 4 is different. The fuel addition pattern shown in FIG. 6A in which the addition time of the fuel adding valve 4 is short is referred to as the short-time addition pattern, and the fuel addition pattern shown in FIG. 6B in which the addition time of the fuel adding valve 4 is long is referred to as the long-time addition pattern.

Assuming that the addition time of the fuel adding valve 4 in the short-time addition pattern is ΔTad1, and the addition time of the fuel adding valve 4 in the long-time addition pattern is ΔTad2, ΔTad2 is twice the value of ΔTad1 (ΔTad2 = ΔTad1x2). On the other hand, as for the number of times fuel is added from the fuel adding valve 4 during a fixed period of time ΔT from the instant X to the instant Y (hereinafter, also simply referred to as "number of addition times"), the number of addition times in the short-time addition pattern is twice that in the long-time addition pattern. That is, the number of times of occurrence of a state in which the addition of fuel from the fuel adding valve 4 is being stopped (hereinafter, also simply referred to as "number of interval times") is also twice.

That is, although the addition time and the number of addition times (or the number of interval times) of the fuel adding valve 4 differ between the short-time addition pattern and the long-time addition pattern, the fuel addition amount Qad during the fixed period of time ΔT is equal.

It is considered that even when the fuel addition amount Qad during the fixed period of time ΔT is equal, if the addition time of the fuel adding valve 4 is set long and the number of fuel addition times is set large as in the short-time addition pattern, fuel inducted to the EHC 100 and oxygen in exhaust gas readily react with each other, allowing more fuel to undergo oxidation in the EHC 100. This is because oxygen used for oxidation of fuel is constantly supplied to the surroundings of the fuel by increasing the number of interval times as in the short-time addition pattern. Therefore, by adding fuel from the fuel adding valve 4 in accordance with the short-time addition pattern, the activity of the EHC 100 is increased.

On the other hand, when the addition time of the fuel adding valve 4 is set long and the number of fuel addition times is set small as in the long-time addition pattern, of the fuel inducted to the EHC 100, the amount of unburned fuel flown to the downstream side increases as it is without being reacted with oxygen in exhaust gas. This is presumably because if a large amount of fuel is added at one time, a deficiency occurs in the amount of oxygen available to reach with the large amount of fuel. Accordingly, the activity of the EHC 100 may be reduced by adding fuel from the fuel adding valve 4 in accordance with the long-time addition pattern.

FIGs. 6A and 6B illustrate a case where with regard to the short-time addition pattern and the long-time addition pattern, the addition time ΔTad2 in the long-time addition pattern is twice the addition time ΔTad1 in the short-time addition pattern. However, in the present invention, the ratio of ΔTad2 to ΔTad1 is not limited to two.

Likewise, while the above description is directed to a case where the fuel addition amount Qad during the fixed period of time ΔT is equal between the short-time addition pattern and the long-time addition pattern, this should not be construed restrictively.

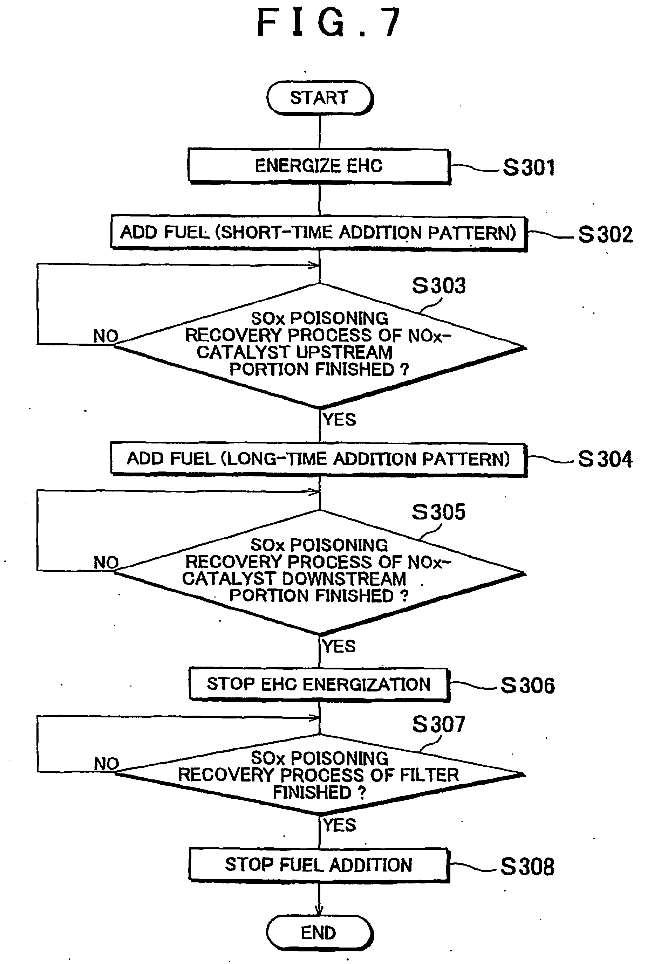

FIG. 7 is a flow chart showing a second SOx poisoning recovery routine according to the second embodiment. This routine is also a program stored in the ROM within the ECU 30 and executed at predetermined intervals during operation of the internal combustion engine 1. It should be noted that the ECU 30 executing this routine is an embodiment of the regeneration means in the second embodiment.

When this routine is executed, first, in step S301, the electric heater 100a is energized by the EUC 30, so that the EHC 100 is raised in temperature. That is, the temperature of the EHC 100 is raised to a temperature for recovering the upstream portion (A) of the NOx catalyst 101 from SOx poisoning. Then, when step S301 is finished, the process proceeds to step S302.

In step S302, the fuel adding valve 4 is opened, and the predetermined amount Qad of fuel (that is experimentally determined in advance) is added to the first exhaust pipe 5a. In this step, fuel is added in accordance with the above-described short-time addition pattern. As a result, more fuel is oxidized in the EHC 100, thereby making it possible to introduce higher temperature exhaust gas to the NOx catalyst 101.

As a result, the ambient atmosphere in the upstream portion (A) of the NOx catalyst 101 is brought into a state suitable for initiating the reduction of SOx (for example, a state in which the temperature is 600°C to 650°C and the air-fuel ratio is substantially stoichiometric or rich), so that SOx stored in the upstream (A) of the NOx catalyst 101 is reduced preferentially. Then, when the processs of step S302 ends, the process proceeds to step S303.

In step S303, it is determined whether the SOx poisoning recovery process of the upstream portion (A) of the NOx catalyst 101 has finished. That is, in this step, it is determined whether the current state is suitable for performing the SOx poisoning recovery process of the downstream portion (B) of the NOx catalyst 101. Here, step S303 corresponds to step S103 of the SOx poisoning recovery routine described above, so detailed description thereof is not repeated. Then, if it is determined that time T1 is equal to or larger than the above-described threshold, it is determined that the SOx poisoning recovery process of the upstream portion (A) of the NOx catalyst 101 has finished, and the process proceeds to step S304.

In step S304, the addition pattern of fuel added from the fuel adding valve 4 is changed to the above-described long-time addition pattern. That is, in order to reduce the activity of the EHC 100, the fuel addition pattern is changed to the long-time addition pattern so that more fuel is contained in the exhaust gas inducted to the NOx catalyst 101 as compared with the case where addition of fuel is performed in accordance with the short-time addition pattern.

Because the amount of fuel that undergoes reaction in the upstream portion (A) of the NOx catalyst 101 thus increases, more heat is generated in the upstream portion (A) of the NOx catalyst 101. The heat flows downstream together with the exhaust gas, raising the temperature of the downstream portion (B) of the NOx catalyst 101. The ambient atmosphere in the downstream portion (B) of the NOx catalyst 101 can be thus brought into a state suitable for initiating the reduction of SOx, so that SOx stored in the downstream portion (B) can be reduced preferentially. Then, when step S304 is finished, the process proceeds to step S305.

In step S305, it is determined whether the SOx poisoning recovery process of the downstream portion (B) of the NOx catalyst 101 has finished. That is, in this step, it is determined whether the current state is suitable for initiating the SOx poisoning recovery process of the filter 102 (C). Here, step S305 corresponds to step S105 of the SOx poisoning recovery routine described above, so detailed description thereof is not repeated. Then, if it is determined that time T2 is equal to or exceeds the above-mentioned threshold, it is determined that the SOx poisoning recovery process of the downstream portion (B) of the NOx catalyst 101 has finished, and the process proceeds to step S306.

In step S306, the energization of the electric heater 100a is stopped. Then, as described above, the activity of the EHC 100 further decreases, so the amount of fuel inducted to the NOx catalyst 101 further increases. However, because the temperature of exhaust gas further decreases, the oxidation reaction of fuel takes place on the more downstream side. As a result, the amount of fuel that is oxidized in the upstream portion (A) of the NOx catalyst 101 decreases, and the amount of fuel that is oxidized in the downstream portion (B) of the NOx catalyst 101 increases. Because the amount of heat generated in the downstream portion (B) of the NOx catalyst 101 thus increases, the temperature of the filter 102 (C) located downstream of the downstream portion (B) rises, so that SOx stored in the filter 102 (C) is reduced preferentially. Then, when step S306 is finished, the process proceeds to step S307.

Here, because the processes of steps S307 and S308 correspond to that of steps S 107 and S108 of the SOx poisoning recovery routine described above, detailed description thereof is not repeated. Then, in step S308, the fuel adding valve 4 is closed to stop addition of fuel. Then, when step S308 is finished, this routine is ended.

As described above, according to the second SOx poisoning recovery routine according to the second embodiment, even when the electric power applied to the electric heater 100a cannot be adjusted, the activity of the EHC 100 may be adjusted by changing the addition pattern of fuel added from the fuel adding valve 4.

Further, in each of steps S303, S305, and S307 of the second SOx poisoning recovery routine according to the second embodiment, the above-described SOx-poisoning-recovery-process-completion determining routine as a subroutine may be executed. Accordingly, the determination as to whether the SOx poisoning recovery process has been finished with respect to each of the upstream portion (A) of the NOx catalyst 101, the downstream portion (B) of the NOx catalyst 101, and the filter 102 (C) can be made with greater precision.

The EHC 100 according to the second embodiment may be an oxidation catalyst that lacks the electric heater 100a, thereby only having an oxidation function. This is because the activity of the EHC 100 may be adjusted by changing the fuel addition pattern of the fuel adding valve 4 as described above.

## Claims

1. An exhaust gas purification system for an internal combustion engine (1), comprising:
an exhaust passage (5), connected at one end to the internal combustion engine (1), through which exhaust gas from the internal combustion engine passes;
an oxidation catalyst (100), provided in the exhaust passage (5) and having an oxidation function;
an exhaust gas purifier (101, 102) provided downstream of the oxidation catalyst (100) in the exhaust passage (5) and purifying exhaust gas passing through the exhaust passage (5);
reductant supplying means (4) for supplying a reductant to exhaust gas flowing into the oxidation catalyst (100) and the exhaust gas purifier (101, 102);
activity adjusting means (100a, 4) for adjusting an activity of the oxidation catalyst (100); and
regeneration means (30) for regenerating a predetermined portion of the exhaust gas purifier (101, 102), wherein the predetermined portion is regenerated by increasing the temperature in the predetermined portion by supplying a reductant to exhaust gas flowing into the oxidation catalyst (100) by the reductant supplying means (4) and changing an amount of reductant oxidized in the oxidation catalyst (100) by adjusting the activity of the oxidation catalyst (100) by the activity adjusting means (100a, 4), and
wherein
when the regeneration process is carried out in a downstream side of the exhaust gas purifier (101, 102), the activity adjusting means (100a, 4) reduces the activity of the oxidation catalyst (100).

2. The exhaust gas purification system for an internal combustion engine (1) according to claim 1, wherein:
when regenerating the exhaust gas purifier (101, 102), the activity of the oxidation catalyst (100) is gradually decreased so that the exhaust gas purifier (101, 102) is sequentially regenerated from an upstream side to the downstream side of the exhaust gas purifier (101, 102).

3. The exhaust gas purification system for an internal combustion engine (1) according to any one of claims 1 through 2, wherein:
the activity adjusting changing means includes a heating means (100a) for heating the oxidation catalyst (100).

4. The exhaust gas purification system for an internal combustion engine (1) according to any one of claims 1 through 2, wherein:
the reductant supplying means includes a fuel adding valve (4).

5. The exhaust gas purification system for an internal combustion engine (1) according to claim 4, wherein:
the activity adjusting means adjusts the activity of the oxidation catalyst (100) by changing an addition pattern of fuel from the fuel adding valve (4).

6. The exhaust gas purification system for an internal combustion engine (1) according to claim 5, wherein:
the activity adjusting means changes the addition pattern by changing a periodic addition time of fuel from the fuel adding valve (4).

7. The exhaust gas purification system for an internal combustion engine (1) according to any one of claims 1 through 6, wherein:
the degree of activity of the oxidation catalyst (100) is adjusted by changing an amount of heat applied to the oxidation catalyst (100).

8. The exhaust gas purification system for an internal combustion engine (1) according to claim 7, wherein:
the change of the amount of heat is executed by a heat amount control of the reductant supply amount control by the reductant supplying means (4) or by heat supply amount by the heating means (100a).

## Patentansprüche

1. Abgasreinigungssystem für einen Verbrennungsmotor (1), aufweisend:
eine Abgasleitung (5), die an einem Ende mit dem Verbrennungsmotor (1) verbunden ist, und durch die Abgas aus dem Verbrennungsmotor strömt;
einen Oxidationskatalysator (100), der in der Abgasleitung (5) vorgesehen ist und der eine Oxidierungsfunktion aufweist;
einen Abgasreiniger (101, 102), der dem Oxidationskatalysator (100) nachgelagert in der Abgasleitung (5) vorgesehen ist, und der Abgas, das durch die Abgasleitung (5) strömt, reinigt;
Reduktionsmittel-Zufuhrmittel (4) zum Zuführen eines Reduktionsmittels zum Abgas, das in den Oxidationskatalysator (100) und den Abgasreiniger (101, 102) strömt;
Aktivitätsanpassungsmittel (100a, 4) zum Anpassen einer Aktivität des Oxidationskatalysators (100); und
Regenerierungsmittel (30) zum Regenerieren eines vorgegebenen Abschnitts des Abgasreinigers (101, 102), wobei der vorgegebene Abschnitt **dadurch** regeneriert wird, dass durch Zuführen eines Reduktionsmittels zu dem in den Oxidationskatalysator (100) strömenden Abgas durch das Reduktionsmittel-Zufuhrmittel (4) die Temperatur im vorgegebenen Abschnitt erhöht wird, und dass durch Anpassen der Aktivität des Oxidationskatalysators (100) durch das Aktivitätsanpassungsmittel (100a, 4) eine im Oxidationskatalysator (100) oxidierte Reduktionsmittelmenge geändert wird, und
wobei
das Aktivitätsanpassungsmittel (100a, 4) die Aktivität des Oxidationskatalysators (100) herabsetzt, wenn der Regenerierungsprozess stromabwärts vom Abgasreiniger (101, 102) durchgeführt wird.

2. Abgasreinigungssystem für einen Verbrennungsmotor (1) nach Anspruch 1, wobei:
bei der Regenerierung des Abgasreinigers (101, 102) die Aktivität des Oxidationskatalysators (100) allmählich herabgesetzt wird, so dass der Abgasreiniger (101, 102) von einer dem Abgasreiniger (101, 102) vorgelagerten Seite zu einer ihm nachgelagerten Seite der Reihe nach regeneriert wird.

3. Abgasreinigungssystem für einen Verbrennungsmotor (1) nach einem der Ansprüche 1 bis 2, wobei:
das Aktivitätsanpassungsmittel ein Heizmittel (100a) beinhaltet, um den Oxidationskatalysator (100) zu erwärmen.

4. Abgasreinigungssystem für einen Verbrennungsmotor (1) nach einem der Ansprüche 1 bis 2, wobei:
das Reduktionsmittel-Zufuhrmittel ein Kraftstoff-Zugabeventil (4) aufweist.

5. Abgasreinigungssystem für einen Verbrennungsmotor (1) nach Anspruch 4, wobei:
das Aktivitätsanpassungsmittel die Aktivität des Oxidationskatalysators (100) durch Ändern eines Musters für die Zugabe von Kraftstoff durch das Kraftstoff-Zugabeventil (4) anpasst.

6. Abgasreinigungssystem für einen Verbrennungsmotor (1) nach Anspruch 5, wobei:
das Aktivitätsanpassungsmittel das Muster für die Zugabe durch Ändern einer periodischen Zeit für die Kraftstoff-Zugabe durch das Kraftstoff-Zugabeventil (4) anpasst.

7. Abgasreinigungssystem für einen Verbrennungsmotor (1) nach einem der Ansprüche 1 bis 6, wobei:
der Aktivitätsgrad des Oxidationskatalysators (100) durch Ändern einer Wärmemenge, die an den Oxidationskatalysator (100) angelegt wird, angepasst wird.

8. Abgasreinigungssystem für einen Verbrennungsmotor (1) nach Anspruch 7, wobei:
das Ändern der Wärmemenge durch eine Wärmemengensteuerung der Reduktionsmittel-Zufuhrmengensteuerung durch das Reduktionsmittel-Zufuhrmittel (4) oder durch eine Wärmezufuhrmenge durch das Heizmittel (100a) ausgeführt wird.

## Revendications

1. Système de purification de gaz d'échappement pour un moteur à combustion interne (1), comportant :
un passage d'échappement (5), relié à une extrémité au moteur à combustion interne (1), à travers lequel le gaz d'échappement du moteur à combustion interne passe ;
un catalyseur d'oxydation (100), prévu dans le passage d'échappement (5) et ayant une fonction d'oxydation ;
un purificateur de gaz d'échappement (101, 102) prévu en aval du catalyseur d'oxydation (100) dans le passage d'échappement (5) et purifiant le gaz d'échappement qui passe par le passage d'échappement (5) ;
des moyens d'alimentation en agent de réduction (4) destinés à délivrer un agent de réduction au gaz d'échappement qui s'écoule dans le catalyseur d'oxydation (100) et le purificateur de gaz d'échappement (101, 102) ;
des moyens d'ajustement d'activité (100a, 4) destinés à ajuster une activité du catalyseur d'oxydation (100) ; et
des moyens de régénération (30) destinés à régénérer une partie prédéterminée du purificateur de gaz d'échappement (101, 102), la partie prédéterminée étant régénérée en augmentant la température dans la partie prédéterminée en délivrant un agent de réduction au gaz d'échappement qui s'écoule dans le catalyseur d'oxydation (100) grâce aux moyens d'alimentation en agent de réduction (4) et en changeant une quantité d'agent de réduction oxydée dans le catalyseur d'oxydation (100) en ajustant l'activité du catalyseur d'oxydation (100) grâce aux moyens d'ajustement d'activité (100a, 4), et
quand le procédé de régénération est réalisé dans un côté aval du purificateur de gaz d'échappement (101, 102), les moyens d'ajustement d'activité (100a, 4) réduisant l'activité du catalyseur d'oxydation (100).

2. Système de purification de gaz d'échappement pour un moteur à combustion interne (1) selon la revendication 1, dans lequel :
lors de la régénération du purificateur de gaz d'échappement (101, 102), l'activité du catalyseur d'oxydation (100) est progressivement diminuée de telle sorte que le purificateur de gaz d'échappement (101, 102) est séquentiellement régénéré depuis un côté amont jusqu'au côté aval du purificateur de gaz d'échappement (101, 102).

3. Système de purification de gaz d'échappement pour un moteur à combustion interne (1) selon l'une quelconque des revendications 1 à 2, dans lequel :
les moyens de changement d'ajustement d'activité comprennent des moyens de chauffage (100a) destinés à chauffer le catalyseur d'oxydation (100).

4. Système de purification de gaz d'échappement pour un moteur à combustion interne (1) selon l'une quelconque des revendications 1 à 2, dans lequel :
les moyens d'alimentation en agent de réduction comprennent une soupape d'addition de carburant (4).

5. Système de purification de gaz d'échappement pour un moteur à combustion interne (1) selon la revendication 4, dans lequel :
les moyens d'ajustement d'activité ajustent l'activité du catalyseur d'oxydation (100) en changeant un modèle d'addition de carburant par la soupape d'addition de carburant (4).

6. Système de purification de gaz d'échappement pour un moteur à combustion interne (1) selon la revendication 5, dans lequel :
les moyens d'ajustement d'activité changent le modèle d'addition en changeant un temps d'addition périodique de carburant par la soupape d'addition de carburant (4).

7. Système de purification de gaz d'échappement pour un moteur à combustion interne (1) selon l'une quelconque des revendications 1 à 6, dans lequel :
le degré d'activité du catalyseur d'oxydation (100) est ajusté en changeant une quantité de chaleur appliquée sur le catalyseur d'oxydation (100).

8. Système de purification de gaz d'échappement pour un moteur à combustion interne (1) selon la revendication 7, dans lequel :
le changement de la quantité de chaleur est exécuté par une commande de quantité de chaleur de la commande de quantité d'alimentation en agent de réduction par les moyens d'alimentation en agent de réduction (4) ou par quantité d'alimentation de chaleur par les moyens de chauffage (100a).
